# EUROPÄISCHE PATENTSCHRIFT

(11) **EP 1 038 114 B1**
(45) Veröffentlichungstag und Bekanntmachung des Hinweises auf die Patenterteilung: **23.02.2005**
(21) Anmeldenummer: 99953830.9
(22) Anmeldetag: 14.10.1999
(51) Int. Cl.: F16C 39/06

(54) **MAGNETLAGER UND DESSEN ANWENDUNG**
MAGNETIC BEARING AND ITS USE
PALIER MAGNETIQUE ET SON UTILISATION

(30) Priorität: 14.10.1998 DE 19847347
(43) Veröffentlichungstag der Anmeldung: 27.09.2000
(73) Patentinhaber: Jenoptik LDT GmbH, 07548 Gera (DE)
(72) Erfinder: WERFEL, Frank, D-04277 Leipzig (DE); DETER, Christhard, D-07548 Gera (DE)
(74) Vertreter: Geyer, Werner, Dr.-Ing.
(86) Internationale Anmeldenummer: PCT/EP1999/007753
(87) Internationale Veröffentlichungsnummer: WO 2000/022311

(56) Entgegenhaltungen:
- EP-A- 0 467 341
- DE-A- 3 325 984
- US-A- 3 026 151
- US-A- 5 270 601
- US-A- 5 325 006
- GAWALEK W ET AL: "REMANENT INDUCTION AND LEVITATION FORCE OF MELT TEXTURED YBCO" APPLIED SUPERCONDUCTIVITY,GB,PERGAMON PRESS, EXETER, Bd. 2, Nr. 7/08, 1. Juli 1994 (1994-07-01), Seiten 465-478, XP000498906 ISSN: 0964-1807
- KOMORI M ET AL: "A NEW TYPE OF SUPERCONDUCTING JOURNAL BEARING USING HIGH TC SUPERCONDUCTORS" CRYOGENICS,GB,IPC SCIENCE AND TECHNOLOGY PRESS LTD. GUILDFORD, Bd. 32, Nr. 7, 1. Januar 1992 (1992-01-01), Seiten 628-633, XP000307397 ISSN: 0011-2275

## Beschreibung

Die Erfindung bezieht sich auf ein Magnetlager, bei dem ein erstes Teil gegenüber einem zweiten Teil magnetisch gelagert ist und das zweite Teil ein supraleitendes Kristall-Material II. Art aufweist, das einen anisotropen Kristall oder mehrere Kristall-Kömer enthält. wobei das Kristallmaterial anisotrop ist, indem der supraleitende Strom in stromtragenden Ebenen geführt ist, wobei das erste Teil eine Konfiguration aus Magneten aufweist, mit denen das supraleitende Kristall-Material in Wechselwirkung steht. Ein solches Magnetlager ist beispielsweise aus der US 5.270.601 bekannt. Weiter bezieht sich die Erfindung auf einen Motor mit einem derartigen Magnetlager sowie auf die Verwendung dieses Motors als Antrieb für einen Polygonspiegel.

Die Projektion von Videobildern mit Hilfe von Lichtstrahlen, insbesondere Laserstrahlen, ist eine technisch anspruchsvolle Aufgabe, die bisher noch nicht in allen Details befriedigt gelöst werden konnte. Ein Problem besteht darin, die einzelnen Komponenten mit noch geringerem Aufwand als bisher fertigen zu können.

Bei dieser Technik wird ein paralleles Lichtbündel, ein Lichtstrahl oder Laserstrahl mit jeweils der Bild- und Farbinformation verschiedener Bildpunkten eines Videobildes beaufschlagt, die mit Hilfe des Lichtbündels sequentiell, analog zur üblichen Darstellung von Videobildern mit Elektronenröhren, auf einem Schirm beleuchtet werden. Die Ablenkgeschwindigkeiten für die Lichtbündel aufgrund der großen Anzahl von Bildpunkten sind außerordentlich hoch.

Für die Zeilenablenkung verwendet man oft einen sich drehenden Polygonspiegel, dessen Drehzahl multipliziert mit der Anzahl der Polygonseiten die Anzahl der Bildpunkte ergibt, die pro Zeiteinheit dargestellt werden können. Im Hinblick auf übliche Fernsehnormen erfordert dies allerdings weit mehr als 100.000 Umdrehungen pro Minute für den Polygonspiegel.

Bei derart hohen Drehzahlen ist es günstig, wenn der Polygonspiegel möglichst reibungsfrei gelagert ist. Dazu sind aus dem Stand der Technik Gaslager oder Magnetlager bekannt.

Unter den Magnetlagern sind insbesondere supraleitende Magnetlager interessant, bei denen magnetische Felder ohne elektrische Leistung aufrecht erhalten werden können. Insbesondere läßt die Verankerung des Magnetfeldes nämlich das Schweben eines Magneten über einem Supraleiter, ähnlich dem bekannten Meißner-Ochsenfeld-Effekt, eine überraschend einfache Konstruktion von Magnetlagern zu.

Durch die Entwicklung von hochtemperatur-supraleitenden Materialien ist der Betrieb derartiger Magnetlager bei der Temperatur des flüssigen Stickstoffes möglich geworden, wodurch der Aufwand gegenüber herkömmlichen Supraleitern mit einer Kühlung durch flüssiges Helium wesentlich verringert wurde. Im folgenden wird für den Ausdruck "hochtemperatur-supraleitend" nur noch "supraleitend" verwendet.

Aus der US 4 956 571 ist ein supraleitendes Magnetlager mit einem aus einem supraleitenden Material bestehenden konusförmigen Statorteil bekannt, mit dem ein ebenfalls konusförmiger, Dauermagnete aufweisender Rotorteil korrespondiert. Das Statorteil erhält einen Flüssigkeitsbehälter für den als Kühlmedium verwendeten flüssigen Stickstoff.

Die US 5 540 116 beschreibt ein supraleitendes Lager, bei dem ein Ring, eine Kappe oder eine Scheibe zur Reduzierung des magnetischen Widerstandes zur Erhöhung der Kräfte zum freien Schweben dient.

Das supraleitende Magnetlager aus der US 5,177,387 weist radial verteilte Permanentmagnete auf. Jeweils zusammengehörige Permanentmagnete einer Lagerstelle sind gegenpolig angeordnet und korrespondieren mit supraleitenden Materialteilen. Die Polung der Permanentmagnete ist dabei axial ausgerichtet.

Aus der US 4 939 120 ist ein supraleitendes Magnetlager bekannt, dessen Permanentmagnetpole an den Enden eines Stabes angeordnet sind. In der Nähe der Enden des Stabes ist jeweils ein Teil aus supraleitendem Material vorgesehen. Zum Antrieb werden zusätzliche Magnete eingesetzt, die mit feststehenden Antriebsspulen korrespondieren.

In der US 5 196 748 wird ein supraleitendes Magnetlager beschrieben, bei dem ring- und scheibenförmige Permanentmagnete auf einer Achse gleichpolig geschichtet angeordnet sind. Dabei bildet diese Achse die Drehachse des Lagers und die Permanentmagnete sind in axialer Richtung magnetisiert. Zwischen den Permanentmagneten sind Lagen aus einem hoch-permeablen Metall angeordnet, wie z. B. dem bekannten Mu-Metall, durch welche die magnetischen Feldlinien geführt werden. Mit Hilfe dieser Metalle kann die Steifigkeit des Lagers gegenüber den vorgenannten Lösungen etwas erhöht werden. Ferner ist in dieser Druckschrift auch ein Lager beschrieben, welches die Anordnung der Permanentmagnete und der hoch-permeablen Lagen in radialer Ausrichtung zeigt.

Ein grundsätzlicher Mangel bei dem aufgezeigten Stand der Technik ist das Fehlen einer Lehre für eine exakte Anordnung von Magneten einzeln oder als Kollektiv, wie diese Lager geeignet zum Ansteuern von Polygonspiegeln ausgelegt werden sollten und welche Anordnungen dafür am günstigsten sind. Als Größen für eine Optimierung werden hier erstens die Tragfähigkeit, also im wesentlichen die Kraft zur Halterung, beispielsweise eines Rotors in einem Motor über einem Stator aus supraleitenden Material, zweitens die erreichbare Steifigkeit, d. h. das Maß der auf den Rotor wirkenden Rückstellkräfte, wenn die Rotationsachse aus ihrer Ruhelage gerät, und drittens die Lagerdämpfung angesehen, die im wesentlichen die Rückstellzeit beim Ausweichen aus der optimal rotationssymmetrischer Konfigurationen bestimmt und die genügend groß sein sollte, um beim Rückstellen ein Schwingen um die Rotationsachse zu vermeiden.

Weitere supraleitende Magnetlager sind aus EP 0 461 341 A1; US 3.026.151; Gawalek et al., Appl. Supercon., Vol. 2, Nr. 7/08, S. 465-478; Komori et al., Cryogenics, Vol. 32, Nr. 7, S. 628-633 bekannt. Magnetlager für Polygonspiegel offenbaren die DE 33 25 984 A1 und US 5325006.

Steifigkeit und Lagerdämpfung könnte man beispielsweise mit Zwischenschichten, wie die Mu-Metallschichten gemäß der US 5.196.748, beeinflussen, wobei dann gegebenenfalls die Tragfähigkeit absinkt. Deswegen sollte die Erhöhung der Tragfähigkeit wichtigstes Optimierungskriterium sein.

Hierzu könnten spezielle Materialien ausgewählt werden, mit denen grundsätzlich auch hohe Tragfähigkeiten erreichbar sind.

In dem Artikel "YBaCuO Large Scale Melt Texturing in a Temperature Gradient" von F. N. Werfel, U. Flögel-Delor, D. Wippich, Inst. Phys. Conf. Ser. No. 158 IOP Publishing Ltd, 1997, Seiten 821 bis 824, wird beispielsweise ein kristallines Material Y_{1,4-1,6}Ba₂Cu₃O_{7-δ} beschrieben, dessen Kristallorientierung sich aufgrund seines anisotropen Verhaltens mit einem speziellen Temperaturverfahren ausrichten läßt. Dieses Material ist auch in seinen supraleitenden und kryomagnetischen Eigenschaften anisotrop, wobei im supraleitenden Zustand die Ströme vorwiegend in parallelen CuO-Ebenen fließen. Mit Hilfe dieses Materials wurde versuchsweise ein Magnetlager aufgebaut, das aber nicht näher beschrieben ist.

Aufgabe der Erfindung ist es, ein Magnetlager zu schaffen, das einfach im Aufbau ist und eine hohe Tragfähigkeit besitzt, die insbesondere auch so groß ist, daß sich Steifigkeit und Lagerdämpfungen in einfacher Weise optimieren lassen. Weiter soll ein magnetgelagerter Motor geschaffen werden, der sich gemäß der Lehre für das Magnetlager bezüglich Tragfähigkeit, Steifigkeit und Lagerdämpfung optimieren läßt, und zwar insbesondere so, daß Polygonspiegel zum Rastern von Lichtbündeln zur Darstellung von Videobildern mit hoher Drehzahl und großer Stabilität betrieben werden können.

Diese Aufgabe wird bei einem Magnetlager der eingangs genannten Art.dadurch gelöst, daß die Normalen auf die stromtragenden Ebenen des Kristallmaterials auf das erste Teil weisen und das Kristallmaterial eine Verbindung YₓBa₂Cu₃O_{(7-δ)} mit 1 ≤ x < 1,6 und 0,01 ≤ δ ≤ 0,10 enthält oder daraus besteht.

Vorzugsweise ist eine Weiterbildung vorgesehen, bei der das supraleitende Kristall-Material, bezogen auf sein Gefüge, ein schmelztexturiertes Vielkornmaterial mit Korngrößen im Bereich von 2 mm bis 20 mm ist und eine Vorzugsrichtung der stromtragenden Ebenen so eingestellt ist, daß eine äußere Magnetflußrichtung der Magnetflußlinien der Konfiguration aus Magneten parallel zu den Normalen auf die stromtragenden Ebenen verlaufen.

Die Auswahl eines Materials mit der Eigenschaft, daß Strom vorwiegend in bestimmte Raumrichtungen fließt, ist nicht selbstverständlich. Daß gerade derartige Materialien allgemein eine höhere Tragfähigkeit ergeben, ist überraschend, da dort ein Freiheitsgrad, nämlich die Richtung der Normalen auf die stromtragenden Ebenen, gegenüber anderen isotropen Materialien mit drei Freiheitsgraden für den Stromtransport nicht zur Verfügung steht. Zur Erklärung dessen nimmt man an, daß eine Verankerung von Magnetfeldlinien, die in das Material eindringen, an Haft- oder Pinningszentren wie Defekten, Ausscheidungen oder Grenzflächen erhöht ist. Dabei ist aber vor allem auch entscheidend, daß durch das äußere Magnetfeld Kreisströme in den stromtragenden Ebenen induziert werden, die ein gegengepoltes Magnetfeld erzeugen. Das führt zu einer erhöhten Tragfähigkeit aufgrund der durch die stromtragenden Ebenen verbesserten diamagnetischen Eigenschaften.

Die Tragfähigkeit kann bei einer bevorzugten Weiterbildung der Erfindung dadurch erhöht werden, daß die Konfiguration Von Magneten mehrere längs einer Achse aufgereihte Magnete aufweist, wobei jeweils ein Magnet bezüglich des in der Reihe nachfolgenden Magneten gegengepolt ist, und die Normalen auf die stromtragenden Ebenen zu dieser Achse weisen, wobei zwischen dem ersten und dem zweiten Teil ein Abstand von wenigstens 0, 1 Millimeter vorgesehen ist.

Mit der Untergrenze von 0,1 mm für diesen Abstand werden die Magnetanordnung und das supraleitende Material sicher entkoppelt. Unerwarteterweise tritt bei Abständen größer als 0,1 mm noch immer ein ausgeprägter Schwebeeffekt auf, der sich bei Versuchen sogar bis zu Abständen von 4 cm beobachten ließ.

Bekanntlich ist Supraleitung nur unterhalb einer kritischen Magnetfeldstärke möglich. Die Gegenpolung zweier Magnete erhöht das gesamte auf den Supraleiter wirkende Magnetfeld um nahezu den Faktor 2, mit der weiteren Konsequenz, daß der aus an den Stoßstellen der Magnete radial austretende Magnetfluß im wesentlichen in Richtung der Normalen auf die stromtragenden Ebenen verläuft.

Die erfindungsgemäßen Magnetlager können insbesondere als Translations- und/oder Rotationslager eingesetzt werden. Bei einem rotatorischen Lager, z. B. für einen Motor zum Antrieb eines Polygonspiegels, ist in bevorzugter Weiterbildung der Erfindung das erste Teil gegenüber dem zweiten Teil drehbar gelagert, wobei die Achse, auf der die Magnete aufgereiht sind, die Drechachse ist und die Normalen auf die stromtragenden Ebenen radial auf diese Drehachse weisen.

Ein guter Kompromiß zwischen der erreichbaren Tragfähigkeit, Steifigkeit und Dämpfung ergibt sich gemäß einer bevorzugten Weiterbildung der Erfindung dadurch, daß der minimale Abstand zwischen dem ersten und dem zweiten Teil eine Größe von zwischen 1 mm und 10 mm, insbesondere zwischen 2 mm und 7 mm, hat. Unerwarteterweise hat sich herausgestellt, daß die angegebenen Grenzen praktisch unabhängig von den gewählten Materialien und sonstigen Abmessungen des Lagers gelten.

Für den Antrieb eines Polygonspiegels wird vorteilhafterweise vorgesehen, daß das erste Teil als Rotor und das zweite Teil als Stator eines elektrischen Motors ausgebildet ist.

Die Dämpfung und die Steifigkeit sind im wesentlichen auch davon abhängig, ob die Kristalle Einkristalle sind oder eine kömige Struktur haben. Bei Einkristallen sind die Steifigkeit und Levitationskraft sehr groß, jedoch die Dämpfung klein. Bei sehr kleinen Komgrenzen ergibt sich genau der umgekehrte Fall. Für die Lagereigenschaften hat es sich als zweckmäßig erwiesen, daß ein remanenter Zustand eingestellt wird, d. h. eine möglichst gute Verankerung des eingefrorenen Magnetflusses erreicht wird. Komgrenzen oder innere Grenzflächen können überraschenderweise sowohl für eine starke Verankerung als auch für eine hohe Dämpfung sorgen. Es hat sich gezeigt, daß besonders gute Dämpfungs- und Steifigkeitseigenschaften erreicht werden, wenn die Körner eine Korngröße im Bereich von 2 mm bis 20 mm haben.

Für das supraleitende Material wird in der Erfindung ein Kristall eingesetzt, der eine Y-Barium-Kupfer-Sauerstoff-Verbindung der Zusammensetzung YₓBa₂Cu₃O_{(7-δ)} mit 1 ≤ x ≤ 1,6 und 0,01 < δ < 0,10 enthält oder daraus besteht. Bei diesem Material ist die erfindungsgemäß geforderte Ausrichtung der Kristalle unproblematisch durchführbar.

Bekanntlicherweise entsteht der supraleitende Effekt erst bei tiefen Temperaturen, die üblicherweise durch Kühlen mit flüssigem Stickstoff erreicht werden, der, nachdem er aufgebraucht ist, nachgefüllt wird. Gemäß einer vorzugsweisen Weiterbildung der Erfindung ist jedoch als Kühlsystem eine Kleinkühlmaschine vorgesehen, bevorzugt eine Stirlingmaschine, die wegen ihres hohen Wirkungsgrades besonders vorteilhaft ist.

Eine versuchsweise eingesetzte Stirlingmaschine mit 2,5 Watt Kälteleistung bei einer Temperatur von 80° K genügte zur Kühlung des zweiten Teils. Sie hatte eine elektrische Leistungsaufnahme von etwa 40 W, was z. B. für den Betrieb eines Lagers für einen Polygonspiegel völlig ausreichend ist. Damit wird ein kontinuierlicher Betrieb möglich, ohne daß ständig Stickstoff nachgefüllt werden muß. Wird ein derartiges Magnetlager zum Betrieb eines Polygonspiegels bei einer Videoprojekton eingesetzt, bildet dies einen merklichen Vorteil. Zudem erlaubt eine Kältemaschine einen Betrieb des Stators bei geringeren Temperaturen, verglichen mit den 77° K bei flüssigem Stickstoff.

Zur Erhöhung der Stabilität hat es sich als besonders vorteilhaft herausgestellt, wenn das erste und das zweite Teil in bevorzugter Weiterbildung der Erfindung von einem luftdichten Gehäuse umgeben sind, das bevorzugt bis zu einem Druck kleiner als 10⁻⁴ Pa evakuiert wird.

Die molekulare Reibung kann weiter verringert werden, wenn die Gaszusammensetzung im Gehäuse verändert wird, wobei bevorzugt das Gehäuse mit einem Gas eines Molekulargewichts kleiner als 28 gefüllt ist, z. B. mit Helium.

Gemäß einer anderen vorzugsweisen Weiterbildung der Erfindung sind die Magnete im ersten Teil Permanentmagnete, wodurch bei Betrieb des Lagers eine geringere Kühlleistung als beim Einsatz von sich erwärmenden Elektromagneten bereitgestellt werden muß.

Ein erfindungsgemäßer Motor mit einem derartigen Magnetlager, bei dem ein Rotor gegenüber einem Statormagneten gelagert ist, ist dadurch gekennzeichnet, daß der Stator als zweites Teil des Magnetlagers ein supraleitendes Material II. Art ist, das einen anisotropen Kristall oder mehrere aus diesem bestehende Körner enthält, wobei der supraleitende Strom in stromtragenden Ebenen des Kristalls bzw. der Körner fließt und der Kristall (oder bei Vorliegen von mehreren Körnern: alle Kristalle) parallel zu der bzw. den Normalen auf die stromtragende(n) Ebene(n) zur Drehachse des Rotors als erstem Teil des Magnetenlagers ausgerichtet ist/sind.

Ein derartiger Motor ist besonders als Antrieb für einen Polygonspiegel geeignet, der auf der Drehachse des Motors befestigt ist. Dabei wird vorteilhafterweise ein Gehäuse vorgesehen, wobei der Polygonspiegel in einem Videosystem eingesetzt ist, bei dem zeitlich periodisch ein Lichtbündel abgelenkt wird, und wobei das Gehäuse sowohl das Lager als auch den Polygonspiegel umgibt und ein oder zwei Fenster zum Ein- und Auslassen des abzulenkenden Lichts aufweist.

Der Supraleiter sollte ein schmelztexturiertes Material mit hoher kritischer Stromdichte sein, das bezogen auf sein Gefüge ein Vielkornmaterial und bezogen auf seine magnetischen Eigenschaften ein Vieldomänenmaterial mit Korngrößen im Bereich von 2 Millimetern bis 20 Millimeter ist, wobei eine Ausrichtung der Domänen nach stromtragenden a-b-Ebenen an dem anisotropen supraleitenden Material vorgenommen und eine Vorzugsausrichtung so eingestellt wird, daß die Magnetflußlinien des permanentmagnetischen Materials parallel zu den Normalen auf die stromtragenden a-b-Ebenen stehen.

Die magnetisch wirksamen Domänen erzeugen in Wechselwirkung mit dem permanentmagnetischen Material des zweiten Elementes eine bisher nicht bekannte hohe Dämpfung bei gleichzeitig ausreichender Tragfähigkeit des Magnetlagers, was für die technische Anwendbarkeit, insbesondere bei unwuchtigen Rotoren, äußerst vorteilhaft ist.

Durch die kristalline Struktur des supraleitenden Materials und seine anisotropen elektromagnetischen und mechanischen Eigenschaften ergeben sich wesentliche Vorteile. Insbesondere ist hier das spezielle Herstellungsverfahren aus dem Artikel von Werfel et al. anwendbar, nach dem den Kristallen im supraleitenden Material durch Anlegen lokaler Temperaturgradienten eine Vorzugsrichtung gegeben wird, die an den stromtragenden a-b-Ebenen des Kristallgitters orientiert und erfindungsgemäß dadurch bestimmt ist, daß die Normale der stromtragenden a-b-Ebenen der Kristalle, die sogenannte c-Achse, weitestgehend parallel zur äußeren Magentflußrichtung des zweiten Elements gelegt wird. In der Praxis konnte gezeigt werden, daß nahezu 90 % der Kristallite eines supraleitenden Materials mit einer Abweichung von ± 10 Grad bezüglich der c-Achse ausgerichtet werden können. Möglich wäre auch ein Zusammenfügen von individuell gezüchteten Einzelkristallen gemäß ihrer Orientierung oder ein Ätzen von Strukturen in einen auf einem Substrat befindlichen Einkristall.

Bei rotatorischen Lagern hat sich mit der Erfindung in Verbindung mit vorzugsweise axial polarisierten Permanentmagneten eine gegenüber bekannten Lagern sehr viel höhere Magnetflußverankerung ergeben, mit der die Steifigkeit des Magnetlagers erheblich, etwa um den Faktor 3₁ (gemessen bei einem speziellen Aufbau) erhöht werden konnte. Dabei ist auch eine vergleichsweise hohe Dämpfung beobachtbar. Diese Eigenschaften lassen sich insbesondere auf die entsprechende Gefügeausbildung des Materials bezüglich der Kristall- bzw. Domänengrenzen in dem weiter oben angegebenen Bereich zurückführen und es kann dadurch ein ausgezeichnetes und für Polygonspiegel geeignetes Dämpfungsverhalten des supraleitenden Magnetlagers eingestellt werden. Für ein rotatorisches Lager kann das erste Element beispielsweise zylinderförmig oder hohlzylinderförmig sein oder eine hohlzylinderförmige Ausfräsung, beispielsweise tulpenförmig, haben.

Für das zweite Element wird ein permanentmagnetisches Teil, in einer scheibenförmigen Ausgestaltung mit einer axialen Magnetisierung bevorzugt, bei der sich scheibenförmig und ringförmige Permanentmagnete einfacher und/oder wirtschaftlicher herstellen und magnetisieren lassen.

Dabei sind die folgenden Ausbildungen besonders zweckmäßig:
- der Permanentmagnet ist ein permanentmagnetischer Ring;
- mehrere axial polarisierte, radialsymetrische, permanentmagnetische Ringe sind in axialer Richtung aneinander geschichtet;
- mehrere axial polarisierte, radialsymetrische, permanentmagnetische Ringe sind in Achsenrichtung gegenpolig aneinander liegend geschichtet.

Zur Verbesserung der Steifigkeit des Lagers können zwischen den geschichteten permanentmagnetischen Ringen permeable Ringscheiben zur Homogenisierung und Führung des magnetischen Flusses angeordnet sein. Dazu eignet sich zum Beispiel Mu-Metall, das auch als besonders günstig für die Rundlaufeigenschaften eines rotatorischen Lagers ist. Solche Ringscheiben sollten eine Dicke im Bereich von 0,5 mm bis 5 mm haben, die mit der Größe des Spaltes zwischen Statorteil und Rotorteil zunimmt.

Wegen der hohen geforderten Umdrehungsgeschwindigkeiten ist es zweckmäßig, das Rotorteil aus einem Material mit großer Zugfestigkeit bei geringer Dichte herzustellen. Dazu eignen sich beispielsweise Aluminium, Titan oder deren Legierungen.

Es sind folgende vorzugsweisen Ausgestaltungen möglich:
Das zweite Element mit dem Permanentmagnet kann als Rotorteil aus einem nichtmagnetischen Zentralbereich und darauf befestigten permanentmagnetischen Ringen ausgeführt sein. Dabei sollte der Zentralbereich aus einem sehr festen Material bestehen, welches nicht magnetisierbar ist, wie beispielsweise Titan. Es können aber auch magnetisierbare Materialien eingesetzt werden, wie beispielsweise Stahllegierungen. Für eine erhöhte Zerreißfestigkeit ist es dann auch besonders günstig, wenn die permanentmagnetischen Ringe aus einem mit Kohlefasern armierten hartmagnetischen Material, insbesondere aus SmCo oder NdFeB bestehen.

Alle diese Ausbildungen lassen sich auch vorteilhaft bei dem erfindungsgemäßen Motor einsetzten. Ein Antriebsspulensystem eines derartigen Motors wird bezüglich des für die Lagerung des Rotors erforderlichen permanentmagnetischen Bereichs so angeordnet, daß eine Wechselwirkung desselben mit den Spulen entsteht, wobei Asymmetrien des permanentmagnetischen Feldes und/oder Wirbelströme im Rotorteil zur Drehmomentübertragung eingesetzt werden. Dabei kann das Antriebsspulensystem des Statorteils mit den permanentmagnetischen Feldern des Rotorteils einen kommutatorlosen Gleichstromantrieb oder einen Wechselstromantrieb, beispielsweise als Kurzschlußläufer oder Hystereseantrieb, bilden.

Die Erfindung wird nachfolgend anhand der Zeichnung im Prinzip beispielshalber noch näher erläutert. Es zeigen:
- Figur 1: eine schematische Darstellung zur Erläuterung der Wechselwirkung eines Permanentmagneten mit einem Supraleiter in Axialgeometrie;
- Figur 2: die Prinzipdarstellung für die Axialgeometrie eines supraleitenden Magnetlagers mit texturiertem supraleitendem Material;
- Figur 3: ein Ausführungsbeispiel für ein radiales Magnetlager mit supraleitendem Statorteil gemäß dem Stand der Technik;
- Figur 4: ein Ausführungsbeispiel wie in Figur 3, jedoch mit optimierter Tragfähigkeit, Lagersteifigkeit und Dämpfung;
- Figur 5: eine Darstellung der anisotropen Magnetisierungskurve für schmelztexturierte YBaCuO Supraleiter;
- Figur 6: eine Darstellung der Einstellung der Kristallrichtung bei einem Zylinder aus supraleitendem Material mit einer radialen Kristall- bzw. Komtextur;
- Figur 7: die Darstellung eines supraleitenden Radial- und Axiallagers mit besonders großer Lagersteifigkeit;
- Figur 8: ein supraleitendes Lager in einem Motor zum Antrieb eines Polygonspiegels;
- Figur 9: ein supraleitendes Lager ähnlich wie in Figur 8, das jedoch als zweiseitiges Radiallager ausgeführt ist, und
- Figur 10: ein zweiseitiges Radiallager mit Polygonspiegel in einer Sandwich-Geometrie.

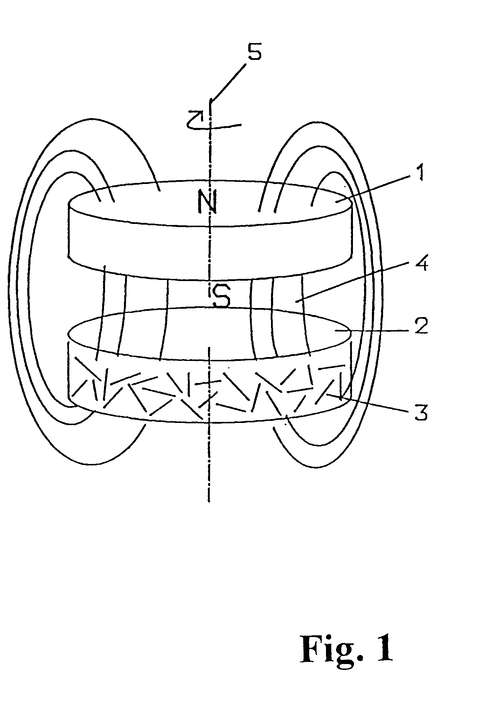

In Figur 1 ist das Prinzip der Wechselwirkung eines in axialer Richtung magnetisierten Permanentmagneten 1 mit einem Teil 3, das aus einem supraleitenden Material 2 hergestellt ist, gezeigt. Die Striche unterschiedlicher Richtung in dem Teil 3 sollen schematisch verdeutlichen, daß dort die Kristallrichtungen statistisch verteilt vorliegen.

Dabei ist der Permanentmagnet 1 über einer Fläche des supraleitenden Materials 2 angeordnet, das beim Betrieb des Lagers, also in dem in der Figur 1 gezeigten Zustand, unter seine kritische Temperatur abgekühlt wird. Die Magnetfeldlinien des Permanentmagneten 1 erzeugen Ströme, die ein Magnetfeld aufbauen, das dem des Permanentmagneten 1 entgegengerichtet ist. Es entsteht also eine Kraftwirkung, die den Permanentmagnet 1 oberhalb des supraleitenden Materials 2 schweben läßt.

Die induzierten Magnetfelder erzeugen eine Kraft, die größer als das Gewicht des Permanentmagneten 1 ist und diesen auf Abstand zu dem supraleitenden Material 2 hält. Sowohl seitliche Bewegungen als auch Rotationsbewegungen um eine Drehachse sind bei geeigneter Formgebung von Magnet 1 und Material 2 möglich.

In dem Beispiel gemäß Figur 1 ist allerdings durch die Rotationssymetrie des magnetischen Feldes des Permanentmagneten 1 und der Verankerung der Magnetfeldlinien ausschließlich ein rotatorischer Freiheitsgrad um eine Drehachse bestimmt. Dabei bildet der Permanentmagnet 1 ein Rotorteil und das supraleitende Material 2 ein Statorteil 3, die voneinander durch einen Spalt 4 getrennt sind. Die Spaltbreite wird durch die sogenannte frozen-field-Condition bestimmt, wodurch auch die beim Abkühlen des Supraleiters eingestellte Spaltgröße dauerhaft erhalten wird.

Der Permanentmagnet 1 dreht nach der Einwirkung äußerer Kräfte nahezu reibungsfrei über dem supraleitenden Material 2. Die Luftreibung kann bei höheren Drehzahlen allerdings Reibungsverluste verursachen. Insbesondere für hohe Drehgeschwindigkeiten ist wegen der Verringerung der Gasreibung ein Vakuum besser als 10⁻¹ Pa zwischen stehendem und drehenden Teil zweckmäßig. Weiter kann man den Permanentmagneten 1 und den supraleitenden Teil 3 zur Verringerung der Luftreibung auch in einem Gehäuse lagern, das mit einem Gas gefüllt ist, welches eine höhere Schallgeschwindigkeit als Luft hat. Dazu bieten sich vor allen Dingen Gase mit geringem Molekulargewicht an, wobei sich insbesondere Helium als besonders vorteilhaft herausgestellt hat.

Alle folgenden Ausführungsbeispiele können, wenn sie beispielsweise zum Antrieb eines Polygonspiegels in der Videotechnik eingesetzt werden, in einem Gehäuse, das hier allerdings nicht gezeigt ist, untergebracht werden. Dann ist es vorteilhaft, auch einen durch das Lager gelagerten Polygonspiegel zur Verringerung der Reibung in dem Gehäuse unterzubringen,
wobei dann in dem Gehäuse Fenster für das Einfallen und Ausfallen des abzulenkenden Lichtbündels vorgesehen sind. Die hierfür notwendigen Fenster sind zwar aufwendiger als in einem Fall, bei dem der Polygonspiegel außerhalb des Gehäuses gelagert würde, der Vorteil geringerer Reibungsverluste auch am Polygonspiegel und die Unabhängigkeit des Laufs bezüglich Bewegungen der Umgebungsluft haben sich aber insgesamt als großer Vorteil erwiesen. Drehzahlen größer als 120 000 U/min erfordern sogar eine evakuierte Umgebung.

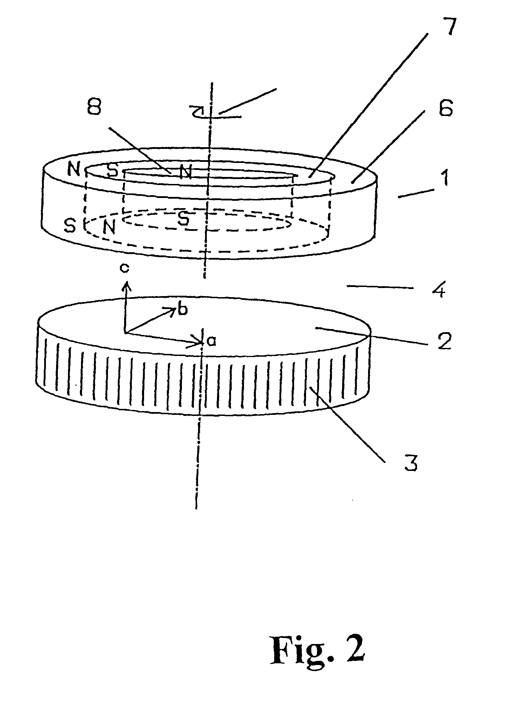

In Figur 2 wird nun die Erfindung näher erläutert. Dabei ist das supraleitende Material 2 ein schmelztexturiertes Vieldomänenmaterial hoher kritischer Stromdichte. In Figur 2 sind ferner die Kristallachsen a, b und c eingezeichnet, wobei die durch die Achsen a und b aufgespannte Fläche den supraleitenden Strom trägt und die höchste Magnetisierung erlaubt. Wie in Figur 2 durch die Striche im Material 2 angedeutet ist, sind die Kristallite in dem supraleitenden Material 2 so ausgerichtet, daß die Normale auf die stromtragenden Ebenen parallel zur Drehachse 5 liegt.

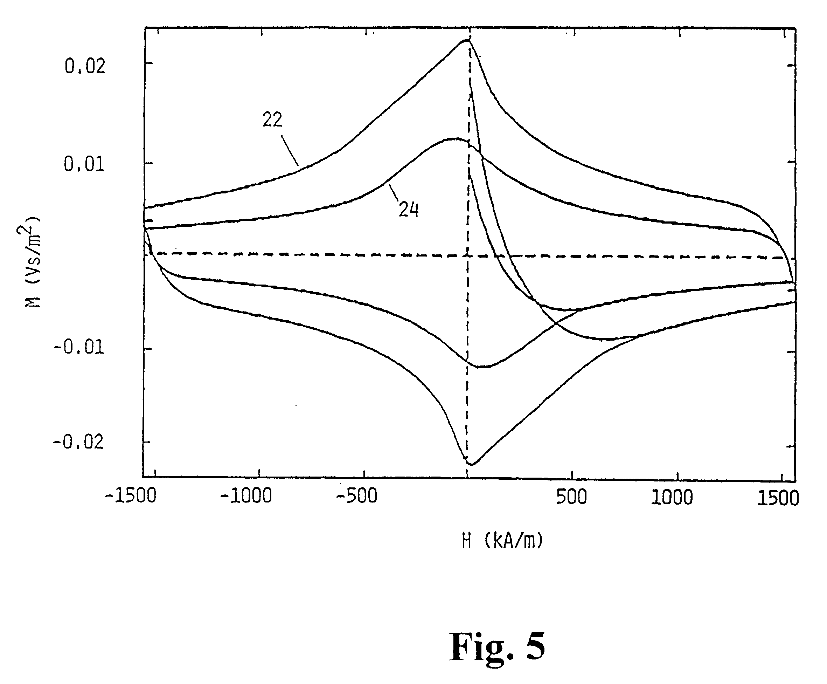

Wegen des anisotropen physikalischen Verhaltens des supraleitenden Materials 2 werden die supraleitenden Ströme vorzugsweise in den in nahezu der gleichen Richtung ausgerichteten a-b-Ebenen des Kristalls erzeugt. Dabei hat sich gezeigt, daß eine gegenüber dem Stand der Technik höhere erreichbare Magnetisierung möglich ist, die sowohl die Tragfähigkeit als auch die Steifigkeit des Magnetlagers gegenüber solchen mit ungeordneten Kristallen erhöht, wie später näher anhand der Figur 5 deutlicher wird.

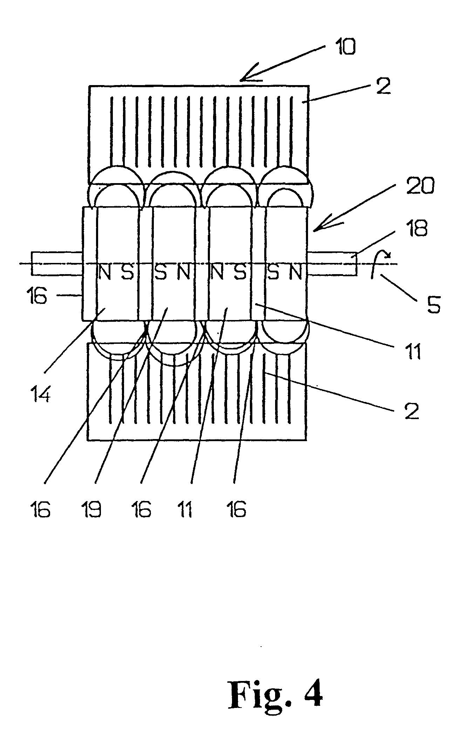

Sind die Kristallite sehr klein, werden die supraleitenden Ströme durch die Korngrenzen gedämpft, so daß sich durch die mittleren Korngrößen der Kristallite auch eine entsprechende Dämpfung eines Magnetlagers einstellen läßt. Eine derartige Dämpfung ist zweckmäßig, damit bei ausweichender Rotationsachse aus der vorgegebenen Lage und Rückstellung, insbesondere bei Erreichen kritischer Drehzahlen, aufgrund der die Steifigkeit bestimmenden Kräfte keine oder eine nur schnell abklingende Schwingung entsteht. Entsprechende Korngrößen der Kristallite wurden vorstehend schon angegeben. Insbesondere hat es sich gezeigt, daß vorteilhafte Dämpfungen, insbesondere bei der Anwendung des schematisch in Figur 4 dargestellten Lagers in einem Motor zum Antrieb eines Polygonspiegels, in der Größenordnung von 8 mm liegen sollten.

Diesbezüglich sei auch noch einmal auf die besonders günstige Anordnung des Permanentmagneten 1 als Rotorteil und des supraleitenden Materials 2 als Statorteil hingewiesen, aufgrund dessen sich das Statorteil besonders einfach kühlen läßt. Bei den Ausführungsbeispielen wird dazu eine Kleinkühlmaschine in Form eines Stirlingkühlers mit 2,5 Watt/80° K oder eine Anordnung, die mit flüssigem Stickstoff betrieben wird, eingesetzt.

Weiter ist aus der Figur 2 erkennbar, daß das Rotorteil aus drei zylindrischen, gegenpolig angeordneten Permanentringen 6, 7, 8 besteht. Die dadurch gegebene Magnetfeldkonfiguration erzeugt im Supraleiter 2 hohe Feldgradienten an den Polaritätsgrenzen NS und SN. Diese sind vor allen Dingen für die erwünschte Steifigkeit, d. h. die Rückführung des Rotors 1 auf die gewünschte Drehachse 5 nach Ausweichen aufgrund von Störungen, äußerst vorteilhaft.

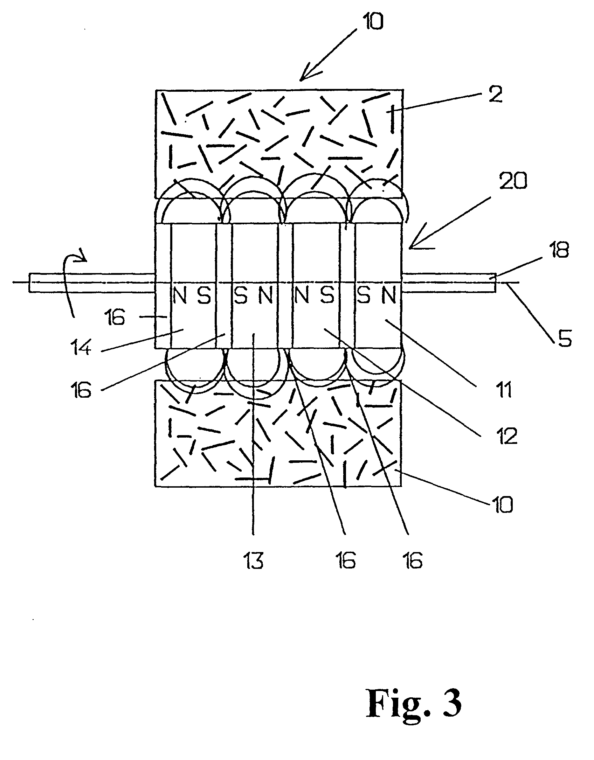

Als weiteres Beispiel ist in Figur 3 ein rotatorisches Lager in Radialgeometrie gezeigt, wie es mit magnetischen Materialien nach dem Stand der Technik ausgeführt werden kann. Das supraleitende Material 2 bildet dabei das Statorteil 10, das aus einem supraleitenden Zylinder oder Ring besteht und, gekühlt wird. Ein System aus geschichteten Permanentmagnetringen 11, 12, 13, 14 und Zwischenringen 16 ist auf einer Achse 18 befestigt und bildet das Rotorteil 20 mit der Drehachse 5. Die axialmagnetisierten Permanentmagnetringe 11, 12, 13, 14 sind, wie aus Figur 3 erkennbar, jeweils zum Nachbarn gegengepolt und erhöhen so den radialen Magnetfluß nahezu auf den zweifachen Wert des einfachen Magneten.

Im gezeigten Ausführungsbeispiel bestehen die Zwischenringe 16 aus hochpermeablen Material, insbesondere aus Weicheisen, das eine Feldführung und Homogenisierung des Magnetfelds der Permanentmagnete 11, 12, 13, 14 bewirkt. Die Achse 18 besteht aus einem unmagnetischen Material. Die optimale Dicke der Zwischenringe 16 hängt wesentlich von der Größe des auch in diesem Beispiel vorhandenen Spaltes 4 ab. Es hat sich herausgestellt, daß bei den Ausführungsbeispielen die Dicke der Zwischenringe 16 ungefähr die Hälfte des Spaltes 4 betragen sollte. Das heißt, daß bei einem üblicherweise verwendeten Spalt 4 in Größe von 1 mm zweckmäßigerweise eine Dicke von ungefähr 0, 5 mm für die Zwischenringe 16 vorzusehen ist.

Figur 4 zeigt im Unterschied zu Figur 3 ein erfindungsgemäßes supraleitendes Radiallager, bei dem das supraleitende Statorteil 10 eine radialsymetrische Ausrichtung der supraleitenden Kristallite aufweist. Durch Anlegen von positiven und negativen örtlichen Temperaturgradienten bei der Herstellung des Statorteils 10 als zylinderförmiges Formteil wurde, wie im Werfel-Artikel beschrieben, eine radiale c-Achse-Textur des supraleitenden Material 2 realisiert. Auch hier wird durch die Vorzugsrichtung der c-Achsen zur Drehachse 5 hin die gegenüber dem Beispiel von Figur 3 höhere Magnetisierung erreicht, die gegenüber bekannten Lösungen eine noch größere Tragfähigkeit und Steifigkeit für die Lagerung des Rotorteils 20 gegenüber dem Statorteil 10 ermöglicht. Die höhere Flußverankerung erlaubt insbesondere die Miniaturisierung von berührungslosen passiven supraleitenden Magnetlagern.

Durch Änderung in der symmetrischen und periodischen Anordnung der Zwischenringe 16 und die Wahl deren Dicke kann die magnetische Flußführung und deren Verankerung im Supraleiter so eingestellt werden, daß an den Achsenenden eine höhere radiale Steifigkeit entsteht, die einer virtuellen Zweipunktlagerung entspricht. Auf diese Weise ist eine besonders hohe Kippsteifigkeit des Rotors 6 möglich.

In Figur 5 ist die Magnetisierung eines YBaCuO Supraleiters als Meßkurve der Magnetisierung m in Abhängigkeit von einem äußeren Magnetfeld H, sowohl parallel zur kristallographischen c-Achse entsprechend Kurve 22 wie auch senkrecht zur kristallographischen c-Achse entsprechend Kurve 24, dargestellt. Die gemäß Kurve 22 gemessene höhere maximale Magnetisierung für ein parallel zur c-Achse gerichtetes Magnetfeld stellt ein experimentell gewonnenes Ergebnis dar, das hier vorteilhaft für eine hohe Steifigkeit erfindungsgemäßer supraleitender Magnetlager eingesetzt ist. Es hat sich in Versuchsaufbauten gezeigt, daß die bei den angegebene Werten erreichbare Dämpfung des supraleitenden Magnetlagers so hoch ist, daß die Eigenfrequenz unwuchtiger Rotorteile beim Hochfahren, selbst bei einer Schwerpunktverlagerung von bis zu 0, 3 mm, sicher durchfahren werden konnte.

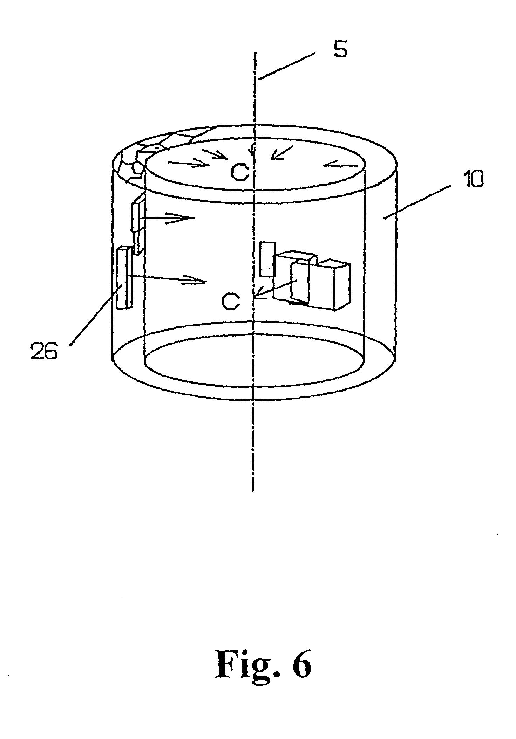

Ein zylinderförmiges Statorteil 10 für ein supraleitendes Radiallager mit radialer Textur ist noch einmal in Figur 6 schematisch gezeigt. Die einzelnen Kristallite 26 werden dabei durch Züchtung mit Hilfe einer Gradienten-Schmelztextur ausgerichtet.

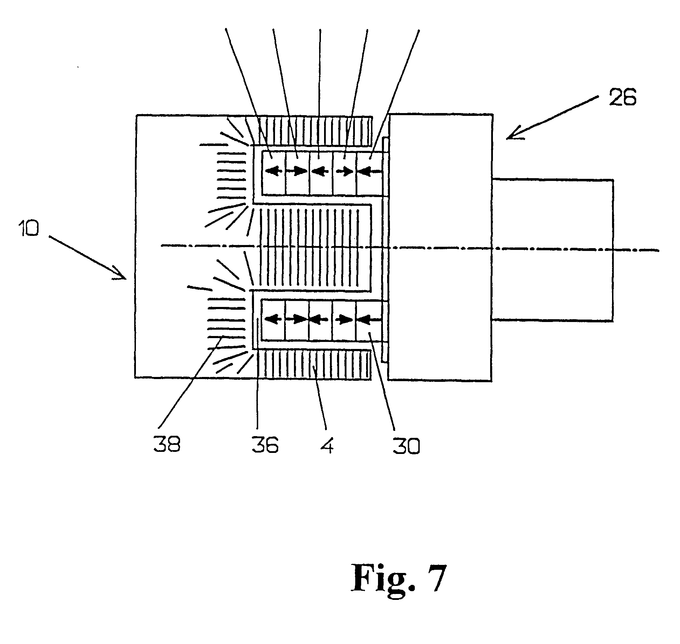

In Figur 7 ist ein supraleitendes Magnetlager mit einem Rotorteil 20 gezeigt, das gegenpolig angeordnete permanentmagnetische Ringe 30, 31, 32, 33, 34 aufweist. Das supraleitende Statorteil 10 hat dabei eine zylinderförmige Aussparung 36, in der die permanentmagnetischen Ringe 30, 31, 32, 33, 34 mit kleinem Spalt 4 angeordnet sind. Das supraleitende Material des Stators 10 weist in radialer Richtung der Ringe 30, 31, 32, 33, 34 die in Figur 6 gezeigte radial ausgerichtete Textur der Kristallite auf. Zusätzlich ist im Gebiet 38 des Statorteils 10 am Boden der zylindrischen Aussparung eine axiale Textur vorgesehen. Eine derartige Kombination von supraleitendem Radiallager mit zusätzlichen axialen Lagerkomponenten sichert besonders hohe magnetische Lagerkräfte und Steifigkeiten.

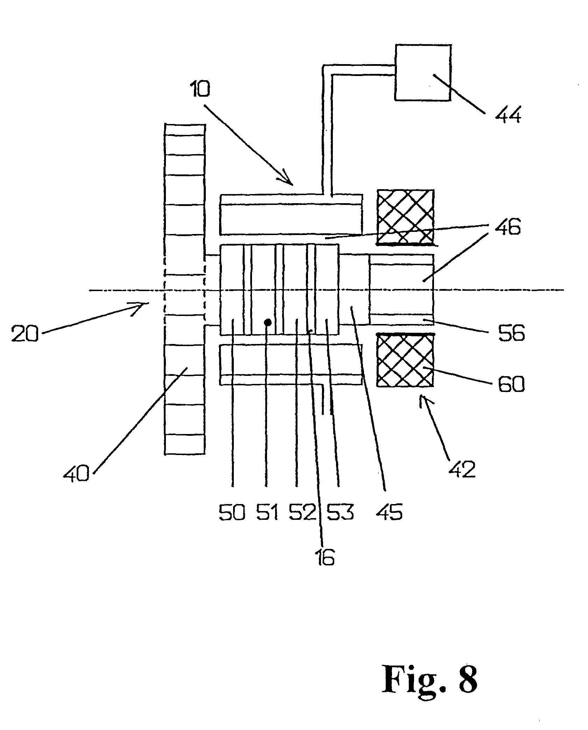

Ein Beispiel eines supraleitenden radialen Magnetlagers mit einem Polygonspiegel 40 an einem Lagerende und einem motorischen Antrieb 42 an seinem anderen Lagerende ist in Figur 8 gezeigt. Dabei besteht das Magnetlager aus einem supraleitenden Statorteil 10, das von einer angeschlossenen Kleinkühlmaschine 44 gekühlt wird. Das Rotorteil 20 trägt einen Polygonspiegel 40 auf einer Achse 45 aus hochfestem Material, auf der permanentmagnetische Ringe 50, 51, 52, 53 gegenpolig geschichtet angeordnet sind, zwischen denen Zwischenringe 16 zur radialen Homogenisierungen der Magnetfelder vorgesehen sind. Die permanentmagnetischen Ringe 50, 51, 52, 53 und die Zwischenringe 16 sind für große Drehzahlen ausgelegt und dazu bevorzugt mit Kohlefasern oder Kevlar armiert, damit die Teile den bei hohen Drehzahlen auftretenden Zentrifugalkräften Stand halten können.

An dem dem Polygonspiegel 40 gegenüberliegenden Ende des Rotorteils 20 ist ein für den motorischen Antrieb 42 angeordnetes Rotorteil als Kurzschlußläufer oder als magnetischer Läufer 56 ausgebildet. Der entsprechende Bereich des Rotorteils 20 ist von einer Statorspule 60 umgeben.

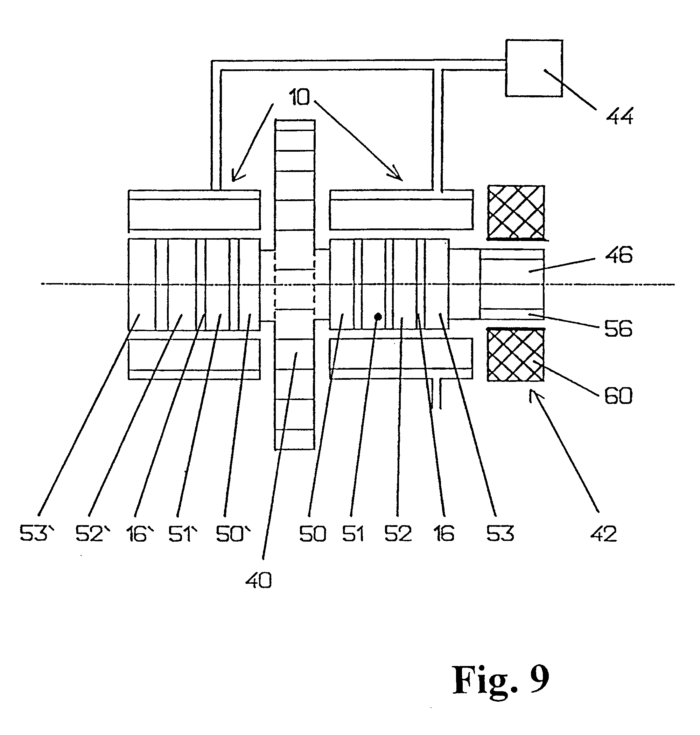

In Figur 9 ist ein Beispiel für einen zweifach radial gelagerten Polygonspiegels 40 mit einer besonders großen Lagersteifigkeit gezeigt, die dadurch bewirkt wird, daß der Polygonspiegel 40 symmetrisch zwischen zwei Lagerteilen gemäß Figur 8 angeordnet ist.

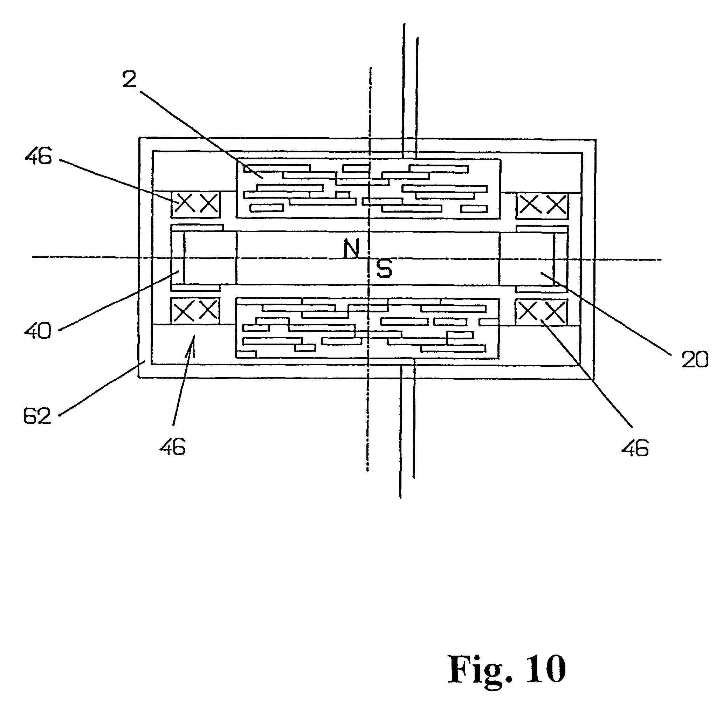

Figur 10 zeigt weiter einen mit einem Polygonspiegel 40 ausgerüsteten Scanner in Sandwichbauweise, mit einem rotatorischen, supraleitenden Magnetlager, wie es im Prinzip in Figur 2 dargestellt ist. Dabei ist hier jedoch ein motorischer Antrieb 46 vorgesehen und ein Spiegelpolygon direkt am Rotorteil 20 ausgebildet. Am äußeren Umfang des Rotorteils 20 ist dazu ein Ring angeordnet, der außen die Spiegelelemente des Polygonspiegels 40 trägt. Weiter sind im Unterschied zu Figur 2 zwei Scheiben aus supraleitendem Material 2 spiegelbildlich zum Permanentmagneten des scheibenförmigen Rotorteils vorgesehen. Das supraleitende Material 2, der Rotor 20 und die spiegelbildlich angeordneten Statorspulen 46 sind in einem dicht schließenden Gehäuse 62 aufgenommen.

Aufgrund der parallelen symmetrischen Anordnung des Statorteils bezüglich. der Stirnfläche des Rotorteils werden besonders stabile Lager und Antriebsverhältnisse bei einem radial ausgedehnten Lager geschaffen. Die gezeigte Anordnung eignet sich auch besonders für die Massenfertigung.

Die vorstehenden Beispiele zeigen, mit welcher Vielfalt sich die erfindungsgemäßen Magnetlager ausbilden lassen. Den wesentlichen Anteil an der erhöhten Tragfähigkeit hat dabei die Ausrichtung des anisotropen supraleitenden Materials bezüglich der maximalen Magnetflußverankerung, die durch die c-Achse bestimmt ist. Steifigkeit und Dämpfung lassen sich, wie dargestellt, mit Hilfe der Kristallitgröße, der Größe des Spalts 4 sowie mit Hilfe von Zwischenringen 16 in großem Maße variieren. Ein weiterer Vorteil des Vielkorngefüges liegt in einem starken Verankerungseffekt für äußere Magnetfelder, wodurch eine exakte Positionierung und/oder Rückpositionierung magnetischer Rotoren in Bezug zum Stator im Bereich von 0,1 µm erreicht wird, was auf den Einfluß der Korngrenzen im remanenten eingefrorenen Zustand des Supraleiters zurückzuführen ist.

## Patentansprüche

1. Magnetlager, bei dem ein erstes Teil (1, 20) gegenüber einem zweiten Teil (3, 10) magnetisch gelagert ist und das zweite Teil (3, 10) ein supraleitendes Kristall-Material (2) II. Art ist, das einen anisotropen Kristall oder mehrere anisotrope Kristall-Körner enthält, wobei
- das Kristallmaterial anisotrop ist, indem der supraleitende Strom in stromtragenden Ebenen fließt,
- das erste Teil (1, 20) eine Konfiguration aus Magneten (1; 6, 7, 8; 11, 12, 13, 14; 30, 31, 32, 34; 50, 51, 52, 53) umfaßt, mit denen das supraleitende Material in Wechselwirkung steht, **dadurch gekennzeichnet, daß** die Normalen auf die stromtragenden Ebenen (a-b) des Kristallmaterials auf das erste Teil (1, 20) weisen und das Kristallmaterial eine Verbindung YₓBa₂Cu₃O_{(7-δ)} mit 1 ≤ x < 1,6 und 0,01 ≤ δ ≤ 0,10 enthält oder daraus besteht.

2. Magnetlager nach Anspruch 1, wobei das supraleitende Kristall-Material (2) bezogen auf sein Gefüge ein schmelztexturiertes Vielkornmaterial mit Korngrößen im Bereich von 2 mm bis 20 mm ist und eine Vorzugsausrichtung der stromtragenden Ebenen (a-b) der Körner so eingestellt ist, daß eine äußere Magnetflußrichtung der Magnetflußlinien (B) der Konfiguration aus Magneten (1, 6-8, 11-14, 30-32, 34, 50-53) parallel zu den Normalen auf die stromtragenden Ebenen (a-b) verläuft.

3. Magnetlager nach Anspruch 1, **dadurch gekennzeichnet, daß** die Konfiguration mehrere längs einer Achse aufgereihte Magnete (1; 6, 7, 8; 11, 12, 13, 14; 30, 31, 32, 34; 50, 51, 52, 53) aufweist, bei der jeweils ein Magnet (1; 6, 7, 8; 11, 12, 13, 14; 30, 31, 32, 34; 50, 51, 52, 53) bezüglich des in der Reihe nachfolgenden Magneten (1; 6, 7, 8; 11, 12, 13, 14; 30, 31, 32, 34; 50, 51, 52, 53) gegengepolt ist, und daß die Normalen auf die stromtragenden Ebenen senkrecht zu dieser Achse weisen, wobei zwischen dem ersten (1, 20) und dem zweiten Teil (3, 10) ein Abstand größer als 0, 1 mm vorgesehen ist.

4. Magnetlager nach Anspruch 3, **dadurch gekennzeichnet, daß** das erste Teil (1, 20) gegenüber dem zweiten Teil (3, 10) drehbar gelagert ist, wobei die Achse (8; 45) die Drehachse ist und die Normalen auf die stromtromtragenden Ebenen radial auf die Drehachse weisen.

5. Magnetlager nach Anspruch 3 oder 4, **dadurch gekennzeichnet, daß** der Abstand zwischen dem ersten (1, 20) und dem zweiten Teil (3, 10) zwischen 1 und 10mm, insbesondere zwischen 2 und 7 mm, beträgt.

6. Magnetlager nach einem der Ansprüche 1 bis 5, **dadurch gekennzeichnet, daß** das erste Teil (1, 20) als Rotor und das zweite Teil (3, 10) als Stator eines elektrischen Motors ausgebildet sind.

7. Magnetlager nach Anspruch 1 oder Anspruch 1 in Verbindung mit einem der Ansprüche 3 bis 6, **dadurch gekennzeichnet, daß** die Kristall-Körner eine Korngröße zwischen 2 mm und 20 mm aufweisen.

8. Magnetlager nach einem der Ansprüche 1 bis 7, **dadurch gekennzeichnet, daß** ein Kühlsystem in Form einer Kleinkühlmaschine (44) vorgesehen ist, die das zweite Teil (3, 10) kühlt.

9. Magnetlager nach Anspruch 8, **dadurch gekennzeichnet, daß** die Kleinkühlmaschine (44) eine Stirlingmaschine ist.

10. Magnetlager nach einem der Ansprüche 1 bis 9, **dadurch gekennzeichnet, daß** das erste (1, 20) und das zweite Teil (3, 10) von einem luftdichten Gehäuse (62) umgeben sind.

11. Magnetlager nach Anspruch 10, **dadurch gekennzeichnet, daß** das Gehäuse (62) bis zu einem Druck kleiner als 10⁻⁴ Pa evakuiert ist.

12. Magnetlager nach Anspruch 10, **dadurch gekennzeichnet, daß** das Gehäuse (62) mit einem Gas mit einem Molekulargewicht kleiner als 28, insbesondere mit Helium, gefüllt ist.

13. Magnetlager nach einem der Ansprüche 1 bis 12, **dadurch gekennzeichnet, daß** die Magnete (1; 6, 7, 8; 11, 12, 13, 14; 30, 31, 32, 34; 50, 51, 52, 53) im ersten Teil Permanentmagnete sind.

14. Motor mit einem Magnetlager gemäß einem der Ansprüche 1 bis 13, bei dem ein Rotor gegenüber einem Stator magnetisch gelagert ist, wobei der Stator als zweites Teil (3, 10) des Magnetlagers das supraleitende Kristall-Material (2) II. Art aufweist und die Normalen zur Drehachse des Rotors als ersten Teil (1, 20) des Magnetlagers weisen.

15. Verwendung des Motors nach Anspruch 14 zum Antrieb eines Polygonspiegels (40), der auf der Drehachse des Motors befestigt ist.

16. Verwendung des Motors nach Anspruch 14 in Verbindung mit einem der Ansprüche 10 bis 12 zum Antrieb eines Polygonspiegels (40) in einem Videosystem, mit dem zeitlich periodisch ein zur Darstellung von Bildpunkten des Videosystems vorgesehenes Lichtbündel abgelenkt wird, wobei das Gehäuse (62) sowohl das Lager als auch den Polygonspiegel (40) umgibt, und in dem Gehäuse (62) ein oder zwei Fenster zum Ein- und Auslassen des abzulenkenden Lichtbündels vorgesehen ist/sind.

## Claims

1. Magnetic bearing in which a first part (1, 20) is supported magnetically relative to a second part (3, 10) and the second part (3, 10) has a Type II superconducting crystal material (2) containing an anisotropic crystal or a plurality of anisotropic crystal grains,
- the crystal material being anisotropic in that the superconducting current flows in current-carrying planes,
- the first part (1, 20) comprising a configuration of magnets (1; 6, 7, 8; 11, 12, 13, 14; 30, 31, 32, 34; 50, 51, 52, 53) with which the superconducting material interacts, **characterised in that** the normals on the current-carrying planes (a-b) of the crystal material point to the first part (1, 20) and the crystal material contains or consists of a compound YₓBa₂Cu₃O_{(7-δ)} with 1 ≤ x < 1.6 and 0.01 ≤ δ ≤ 0.10.

2. Magnetic bearing according to claim 1, wherein the superconducting material (2), in terms of its structure, is a melt-textured multigrain material with grain sizes in the range of 2 mm to 20 mm and a preferred direction of the current-carrying planes (a-b) of the grains is adjusted in such a way that an external magnetic flux direction of the magnetic flux lines (B) of the configuration of magnets (1, 6-8, 11-14, 30-32, 34, 50-53) extends parallel to the normals on the current-carrying planes (a-b).

3. Magnetic bearing according to claim 1, **characterised in that** the configuration has a plurality of magnets (1; 6, 7, 8; 11, 12, 13, 14; 30, 31, 32, 34; 50, 51, 52, 53) which are in series along a shaft, wherein each magnet (1; 6, 7, 8; 11, 12, 13, 14; 30, 31, 32, 34; 50, 51, 52, 53) is oriented with its poles oppositely aligned relative to the next magnet (1; 6, 7, 8; 11, 12, 13, 14; 30, 31, 32, 34; 50, 51, 52, 53) in the series, and **in that** the normals on the current-carrying planes point vertically to this shaft, wherein a distance of more than 0.1 mm is provided between the first (1, 20) and second part (3, 10).

4. Magnetic bearing according to claim 3, **characterised in that** the first part (1, 20) is supported so as to be rotatable relative to the second part (3, 10), wherein the shaft (8; 45) is the axis of rotation and the normals on the current-carrying planes are point radially to the axis of rotation.

5. Magnetic bearing according to claim 3 or 4, **characterised in that** the distance between the first (1, 20) and second part (3, 10) is between 1 mm and 10 mm, especially between 2mm and 7 mm.

6. Magnetic bearing according to one of claims 1 to 5, **characterised in that** the first part (1, 20) is constructed as a rotor and the second part (3, 10) is constructed as a stator of an electric motor.

7. Magnetic bearing according to claim 1, or claim 1 in combination with one of claims 3 to 6, **characterised in that** the crystal grains have a grain size between 2 mm and 20 mm.

8. Magnetic bearing according to one of claims 1 to 7, **characterised in that** a cooling system is provided in the form of a small cooling machine (44) which cools the second part (3, 10).

9. Magnetic bearing according to claim 8, **characterised in that** the small cooling machine (44) is a Stirling engine.

10. Magnetic bearing according to one of claims 1 to 9, **characterised in that** the first (1, 20) and second parts (3, 10) are enclosed by an air-tight housing (62).

11. Magnetic bearing according to claim 10, **characterised in that** the housing (62) is evacuated until attaining a pressure of less than 10⁻⁴ Pa.

12. Magnetic bearing according to claim 10, **characterised in that** the housing (62) is filled with a gas having a molecular weight of less than 28, especially with helium.

13. Magnetic bearing according to one of claims 1 to 12, **characterised in that** the magnets (1; 6, 7, 8; 11, 12, 13, 14; 30, 31, 32, 34; 50, 51, 52, 53) in the first part are permanent magnets.

14. Motor with a magnetic bearing according to one of claims 1 to 13, in which a rotor is magnetically supported relative to a stator, wherein the stator, as second part (3, 10) of the magnetic bearing, has the Type II superconducting material (2) and the normals point towards the axis of rotation of the rotor as first part (1, 20) of the magnetic bearing.

15. Use of the motor according to claim 14 for driving a polygon mirror (40) which is fastened to the rotating shaft of the motor.

16. Use of the motor according to claim 14 in combination with one of claims 10 to 12 for driving a polygon mirror (40) in a video system by which a light bundle provided for displaying image points of the video system is deflected periodically with respect to time, wherein the housing (62) encloses the bearing as well as the polygon mirror (40) and one or two windows are provided in the housing (62) such that the light bundle to be deflected can enter and exit.

## Revendications

1. Palier magnétique, dans lequel une première partie (1, 20) est portée de façon magnétique par rapport à une seconde partie (3, 10) et la seconde partie (3, 10) est un matériau de cristal (2) supraconducteur de second type, qui contient un cristal anisotrope ou plusieurs grains de cristal anisotropes,
- le matériau de cristal étant anisotrope du fait que le courant supraconducteur circule dans des plans portant le courant,
- la première partie (1, 20) comprend une configuration constituée d'aimants (1 ; 6, 7 ; 8, 11, 12, 13, 14 ; 30, 31, 32, 34 ; 50, 51, 52, 53), avec lesquels le matériau supraconducteur est en interaction,
**caractérisé en ce que** les perpendiculaires aux plans (a-b) portant le courant du matériau de cristal sont dirigées vers la première partie (1, 20) et le matériau de cristal contient un composé YₓBa₂Cu₃O_{(7-δ)} avec 1 ≤ x < 1,6 et 0,01 ≤ δ ≤ 0,10 ou est à base de celui-ci.

2. Palier magnétique selon la revendication 1, dans lequel le matériau de cristal (2) supraconducteur, en ce qui concerne sa structure, est un matériau multigranulaire structuré par fusion, avec des grosseurs de grains situées dans la plage de 2 mm à 20 mm, et une orientation préférentielle des plans (a-b) des grains portant le courant est réglée de telle sorte qu'une direction extérieure de flux magnétique des lignes de flux magnétique (B) de la configuration d'aimants (1, 6-8, 11-14, 30-32, 34, 50-53) est parallèle aux perpendiculaires aux plans (a-b) portant le courant.

3. Palier magnétique selon la revendication 1, **caractérisé en ce que** la configuration présente plusieurs aimants (1 ; 6, 7, 8 ; 11, 12, 13, 14 ; 30, 31, 32, 34 ; 50, 51, 52, 53) alignés le long d'un axe, dans laquelle à chaque fois un aimant (1 ; 6, 7, 8 ; 11, 12, 13, 14 ; 30, 31, 32, 34 ; 50, 51, 52, 53) est de polarité contraire par rapport à l'aimant (1 ; 6, 7, 8 ; 11, 12, 13, 14 ; 30, 31, 32, 34 ; 50, 51, 52, 53) suivant dans la rangée et **en ce que** les perpendiculaires aux plans portant le courant sont orientées perpendiculairement à cet axe, un espacement supérieur à 0,1 mm étant prévu entre la première partie (1, 20) et la seconde (3, 10).

4. Palier magnétique selon la revendication 3, **caractérisé en ce que** la première partie (1, 20) est montée de façon rotative par rapport à la seconde partie (3, 10), l'axe (8 ; 45) étant l'axe de rotation et les perpendiculaires aux plans portant le courant étant dirigées radialement vers l'axe de rotation.

5. Palier magnétique selon la revendication 3 ou 4, **caractérisé en ce que** l'espacement entre la première partie (1, 20) et la seconde partie (3, 10) est compris entre 1 et 10 mm, en particulier entre 2 et 7 mm.

6. Palier magnétique selon l'une quelconque des revendications 1 à 5, **caractérisé en ce que** la première partie (1, 20) est conçue comme un rotor et la seconde partie (3, 10) comme le stator d'un moteur électrique.

7. Palier magnétique selon la revendication 1 ou la revendication 1 en liaison avec l'une des revendications 3 à 6, **caractérisé en ce que** les grains de cristal présentent une grosseur de grain comprise entre 2 mm et 20 mm.

8. Palier magnétique selon l'une quelconque des revendications 1 à 7, **caractérisé en ce qu'**un système de refroidissement est prévu sous la forme d'une petite machine réfrigérante (44), qui refroidit la seconde partie (3, 10).

9. Palier magnétique selon la revendication 8, **caractérisé en ce que** la petite machine à refroidissement (44) est une machine Stirling.

10. Palier selon l'une quelconque des revendications 1 à 9, **caractérisé en ce que** la première partie (1, 20) et la seconde partie (3, 10) sont entourées d'un boîtier (62) étanche à l'air.

11. Palier magnétique selon la revendication 10, **caractérisé en ce que** le boîtier (62) est mis sous vide jusqu'à une pression inférieure à 10⁻⁴ Pa.

12. Palier magnétique selon la revendication 10, **caractérisé en ce que** le boîtier (62) est rempli avec un gaz présentant un poids moléculaire inférieur à 28, en particulier avec de l'hélium.

13. Palier magnétique selon l'une quelconque des revendications 1 à 12, **caractérisé en ce que** les aimants (1 ; 6, 7, 8 ; 11, 12, 13, 14 ; 30, 31, 32, 34 ; 50, 51, 52, 53) sont des aimants permanents dans la première partie.

14. Moteur avec un palier magnétique selon l'une quelconque des revendications 1 à 13, dans lequel un rotor est porté de façon magnétique par rapport à un stator, le stator présentant, en tant que seconde partie (3, 10) du palier magnétique, le matériau de cristal (2) supraconducteur de second type et les perpendiculaires étant dirigées vers l'axe de rotation du rotor servant de première partie (1, 20) du palier magnétique.

15. Utilisation du moteur selon la revendication 14, pour l'entraînement d'un miroir polygonal (40), qui est fixé sur l'axe de rotation du moteur.

16. Utilisation du moteur selon la revendication 14 en liaison avec l'une quelconque des revendications 10 à 12 pour l'entraînement d'un miroir polygonal (40) dans le système vidéo, avec lequel un faisceau de lumière prévu pour la représentation de points d'image d'un système vidéo est dévié de façon périodique dans le temps, le boîtier (62) entourant aussi bien le palier que le miroir polygonal (40), et une ou deux fenêtres pour l'entrée et la sortie du faisceau lumineux à dévier étant prévues dans le boîtier (62).
